# DEMANDE DE BREVET EUROPEEN

(11) **EP 1 384 495 A1**
(43) Date de publication de la demande: **28.01.2004**
(21) Numéro de dépôt: 03291802.1
(22) Date de dépôt: 21.07.2003
(51) Int. Cl.: A63B 9/00, E04H 17/16, A63B 71/02, G09F 7/18, G09F 15/00

(54) **Assemblage d'un élément tubulaire et d'au moins un panneau, destiné à équiper des installations de jeux de plein air**

(30) Priorité: 23.07.2002 FR 0209339
(71) Demandeur: COMPAGNIE PLASTIC OMNIUM, 69007 Lyon (FR)
(72) Inventeur: Tuc, Grégory, 31620 Fronton (FR); Montfort, Camille, 31400 Toulouse (FR); Faure, Christophe, 82230 Genebrieres (FR)
(74) Mandataire: Leszczynski, André

(57) **Abrégé**

La présente invention concerne l'assemblage d'un élément tubulaire (1) et d'au moins un panneau (14), caractérisé par le fait qu'il comporte au moins une paire d'éléments de fixation (4 ; 13) aptes à être montés sur l'élément tubulaire (1) et par le fait que la paire d'éléments de fixation (4 ; 13) et le panneau (14) sont configurés de manière à permettre le maintien du panneau entre les éléments de fixation, ceux-ci étant disposés de part et d'autre du plan du panneau.

## Description

La présente invention a pour objet un assemblage d'un élément tubulaire et d'au moins un panneau, destiné notamment à équiper des installations de jeux de plein air.

Il existe déjà de nombreux dispositifs pour réaliser l'assemblage d'un élément tubulaire et d'un panneau, ces dispositifs étant en général complexes et coûteux.

La présente invention se propose de fournir un assemblage perfectionné facile à mettre en oeuvre et présentant des caractéristiques de solidité mécanique fiables, assurant une grande sécurité d'utilisation.

L'invention a pour objet un tel assemblage, caractérisé par le fait qu'il comporte au moins une paire d'éléments de fixation aptes à être montés sur l'élément tubulaire et par le fait que la paire d'éléments de fixation et le panneau sont configurés de manière à permettre le maintien du panneau entre les éléments de fixation, ceux-ci étant disposés de part et d'autre du plan du panneau.

Grâce à l'invention, le panneau est assemblé d'une manière fiable avec l'élément tubulaire, pouvant être maintenu fermement grâce aux éléments de fixation.

L'un au moins des éléments de fixation peut comporter une face destinée à venir s'appliquer contre un côté du panneau.

De préférence, l'un au moins des éléments de fixation comporte au moins une patte de fixation apte à s'engager dans une fente correspondante réalisée dans l'élément tubulaire. Les éléments de fixation peuvent ainsi être montés de manière simple sur l'élément tubulaire, en introduisant la ou les pattes de fixation dans la fente correspondante.

Chaque patte de fixation précitée peut comporter une portée apte à venir en appui contre une paroi intérieure de l'élément tubulaire de manière à assurer le blocage de l'élément de fixation correspondant sur l'élément tubulaire.

Dans une mise en oeuvre particulière de l'invention, l'un au moins des éléments de fixation comporte au moins deux pattes de fixation aptes à s'engager dans une même fente longitudinale de l'élément tubulaire ou dans deux fentes respectives. Ces deux pattes peuvent être décalées par rapport à un axe central de l'élément de fixation.

Chaque patte de fixation peut être configurée de manière à ce que, lorsqu'elle est insérée dans la fente correspondante de l'élément tubulaire, l'élément de fixation puisse pivoter par rapport à l'élément tubulaire, au moins avant la mise en place du panneau. Ainsi l'assemblage peut être réalisé de manière particulièrement aisée car, lors de la mise en place des deux éléments de fixation sur l'élément tubulaire, ceux-ci peuvent être écartés angulairement de manière à permettre d'insérer entre eux le panneau. Puis les deux éléments de fixation, ou l'un d'entre eux seulement, subissent un pivotement par rapport à l'élément tubulaire de manière à le ou les rabattre contre un côté respectif du panneau. Ce dernier se trouve alors enserré entre les deux éléments de fixation.

Dans un exemple de mise en oeuvre de l'invention, les éléments de fixation comportent chacun une ouverture et le panneau un orifice et ces ouvertures et cet orifice sont configurés de manière à définir un passage pour la tige d'une vis coopérant avec un écrou.

L'un au moins des éléments de fixation comporte avantageusement un renfoncement apte à loger la tête d'une vis ou un écrou, la profondeur du renfoncement étant notamment sélectionnée de manière à ce que la tête de vis ou l'écrou y soit complètement logé(e). Ainsi, la tête de vis ou l'écrou se trouve en retrait de la surface extérieure de l'élément de fixation, ce qui évite qu'un enfant jouant sur l'installation de jeux ne se blesse au contact de la tête de vis ou de l'écrou.

Dans une mise en oeuvre particulière de l'invention, l'assemblage peut comporter au moins un bouchon configuré pour pouvoir s'engager dans le renfoncement précité en recouvrant la tête de vis ou l'écrou. Le bouchon est avantageusement configuré de manière à ne pas déborder du renfoncement lorsqu'il est en place dans ce renfoncement et peut comporter une paroi de fond formant avec une surface extérieure de l'élément de fixation une surface sensiblement continue.

Le bouchon permet ainsi d'améliorer encore la sécurité de l'assemblage en diminuant les risques de blessure vis-à-vis des enfants et de prévenir des actes de malveillance de démontage de l'assemblage en rendant difficile l'accès à la vis.

Le bouchon peut comporter une rainure apte à coopérer avec une nervure de l'élément de fixation située dans le renfoncement correspondant de manière à réaliser une fonction de détrompeur.

Les éléments de fixation peuvent présenter chacun une forme générale de demi-coquille.

La paire d'éléments de fixation peut être constituée par des pièces identiques.

Dans un exemple de mise en oeuvre de l'invention, l'un au moins des éléments de fixation est réalisé par moulage par injection de matière thermoplastique, notamment du polyamide.

En variante, l'un au moins des éléments de fixation est réalisé en aluminium ou en acier.

L'assemblage peut être dépourvu de moyen de fixation direct entre le panneau et l'élément tubulaire.

Dans un exemple de mise en oeuvre de l'invention, l'élément tubulaire comporte une pluralité de fentes permettant la fixation d'au moins deux paires d'éléments de fixation, côte à côte.

L'élément tubulaire peut comporter quatre fentes disposées en damier permettant de recevoir deux paires de pattes de deux éléments de fixation, les quatre pattes se trouvant alors sur une même rangée et une patte de chaque paire alternant avec une patte de l'autre paire.

L'invention a encore pour objet un élément de fixation pour l'assemblage d'un élément tubulaire et d'un panneau, caractérisé par le fait qu'il comporte au moins une patte de fixation apte à s'engager dans une fente de l'élément tubulaire et par le fait qu'il comporte une ouverture permettant le passage d'une tige de vis permettant le maintien du panneau.

L'invention a encore pour objet un élément tubulaire d'un assemblage tel que défini ci-dessus, caractérisé par le fait qu'il comporte quatre fentes disposées en damier.

L'élément tubulaire peut comporter deux fentes longitudinalement espacées suivant l'axe de l'élément tubulaire.

D'autres caractéristiques et avantages de la présente invention ressortiront à la lecture de la description détaillée qui va suivre, d'exemples de mise en oeuvre non limitatifs, et à l'examen du dessin annexé, sur lequel :
- la figure 1 représente schématiquement et partiellement, en perspective, un élément tubulaire et un élément de fixation conformes à l'invention, avant leur assemblage,
- la figure 2 représente schématiquement et partiellement, en perspective, l'élément tubulaire et l'élément de fixation de la figure 1, après leur assemblage,
- la figure 3 représente schématiquement et partiellement, en perspective, en vue de dessus, un panneau inséré entre une paire d'éléments de fixation montée sur l'élément tubulaire, avant la mise en place de la vis et de l'écrou,
- la figure 4 représente schématiquement et partiellement, en perspective, l'assemblage définitif,
- la figure 5 est une vue de dessus, schématique et partielle, de l'assemblage de la figure 4,
- la figure 6 représente schématiquement et partiellement, en perspective, un élément de fixation et un bouchon selon un exemple de mise en oeuvre de l'invention,
- la figure 7 représente schématiquement et partiellement, en perspective, un assemblage comportant deux paires d'éléments de fixation pour deux panneaux respectifs, deux éléments de fixation seulement étant montés, et
- la figure 8 représente schématiquement et partiellement, en perspective, l'assemblage de la figure 7, les deux paires d'éléments de fixation étant montées.

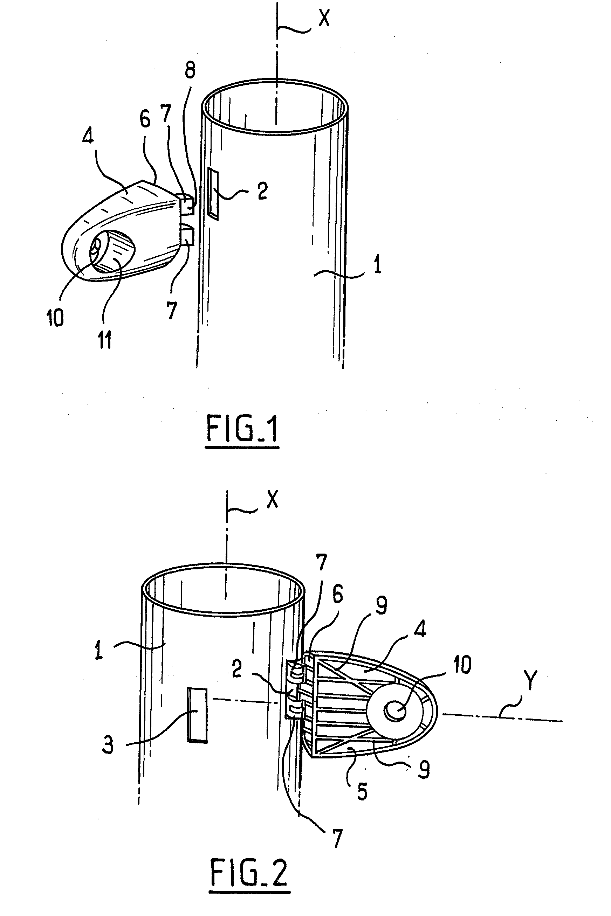

On a représenté sur la figure 1 un élément tubulaire 1 cylindrique de révolution d'axe X, d'un assemblage destiné, dans l'exemple décrit, à équiper une installation de jeux de plein air.

L'élément tubulaire 1, réalisé par exemple en inox, comporte deux fentes longitudinales 2 et 3 visibles sur les figures 1 et 2 notamment. Ces fentes 2 et 3 peuvent être réalisées par exemple par découpe au laser et sont décalées longitudinalement suivant l'axe X.

On voit également sur ces figures un élément de fixation 4 réalisé par moulage par injection de polyamide 6 et présentant une forme générale de demi-coquille ayant un axe central Y.

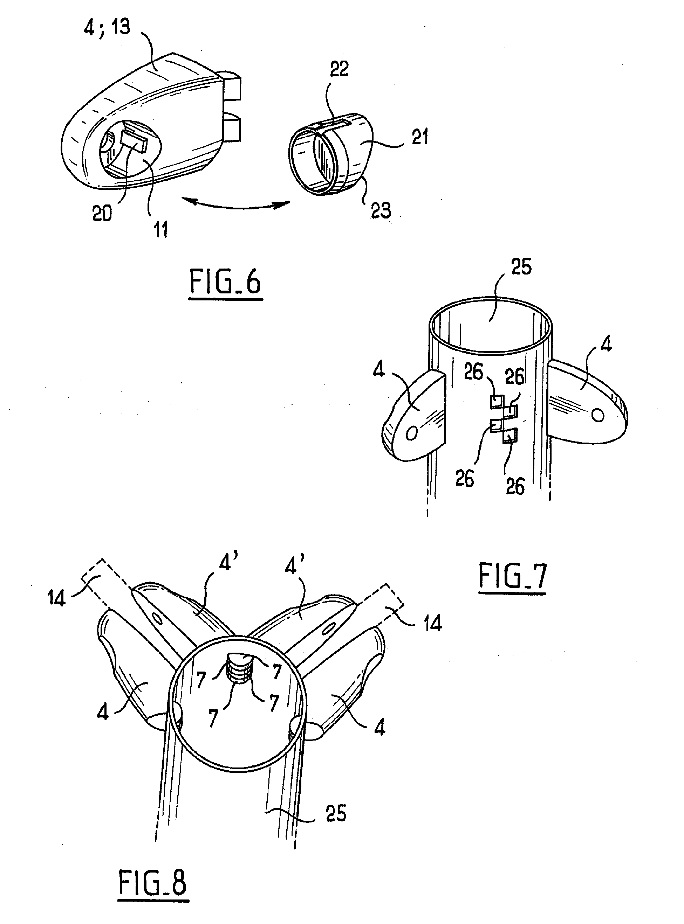

L'élément de fixation 4 présente une première face 5 sensiblement plane définissant la base de la forme en demi-coquille et une deuxième face de côté 6 conformée de manière à épouser sensiblement la paroi extérieure de l'élément tubulaire 1, comme illustré sur la figure 5 notamment.

L'élément de fixation 4 est pourvu de deux pattes 7 se raccordant à la face de côté 6 et destinées à être introduites dans la fente 2 de l'élément tubulaire 1.

Les pattes 7 s'étendent, dans la direction longitudinale, sur une distance égale à la hauteur de la fente 2 de sorte que l'élément de fixation 4 puisse être immobilisé axialement une fois mis en place sur l'élément tubulaire 1.

Comme on peut le voir sur la figure 2, les pattes 7 sont disposées, dans la direction longitudinale, plus près d'un bord de la face de côté 6 que de l'autre bord. Autrement dit, les pattes 7 sont décalées par rapport à l'axe central Y de l'élément de fixation 4.

Les pattes 7, observées de dessus, comme illustré sur les figures 2 et 5, sont recourbées vers l'extérieur de manière à définir une portée 8 destinée à s'appliquer contre la paroi intérieure de l'élément tubulaire 1 une fois les pattes 7 introduites dans la fente 2.

Cette forme des pattes 7 autorise un pivotement de l'élément de fixation 4 par rapport à l'élément tubulaire 1 lorsqu'il est en place sur cet élément tubulaire.

Dans l'exemple décrit, l'élément de fixation 4 comporte des nervures de rigidification 9 donnant sur sa première face 5.

Du côté bombé de l'élément de fixation 4 est réalisé un renfoncement 11 permettant de loger complètement une tête de vis ou un écrou et au fond duquel débouche une ouverture 10.

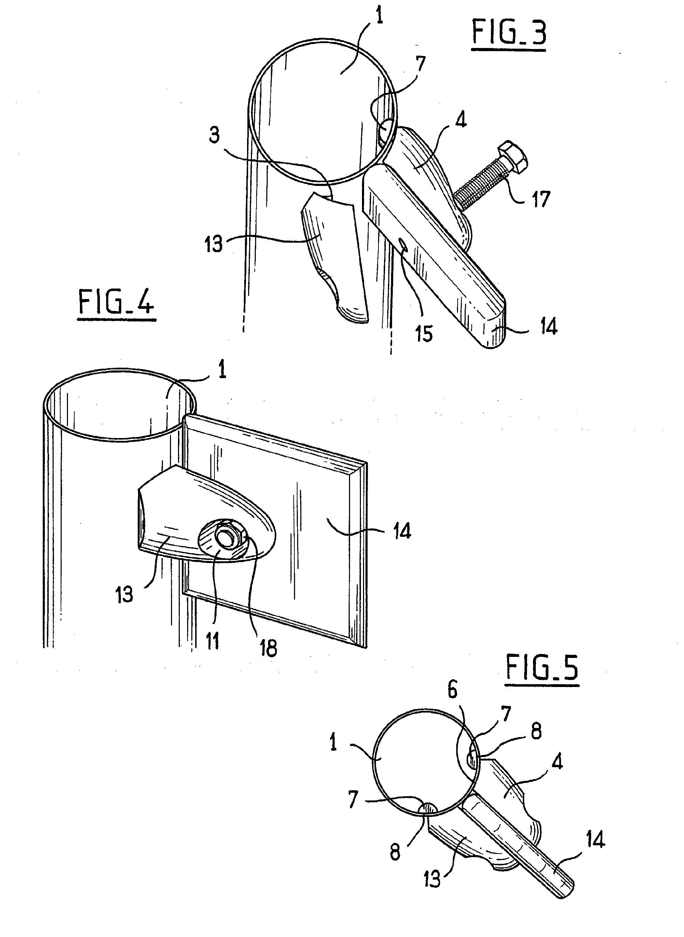

La fente 3 de l'élément tubulaire 1 permet de recevoir un second élément de fixation 13 identique à l'élément de fixation 4 précédemment décrit, comme on le voit sur la figure 3 notamment.

Les éléments de fixation 4 et 13 étant identiques et les pattes 7 de chaque élément étant décalées par rapport à l'axe Y correspondant, le décalage longitudinal suivant l'axe X des fentes 2 et 3 permet le positionnement des éléments de fixation 4 et 13 l'un en face de l'autre, l'un étant généralement l'image de l'autre par rapport au plan du panneau.

Les fentes 2 et 3 sont espacées d'un angle prédéterminé de sorte qu'une fois les éléments de fixation 4 et 13 en place sur l'élément tubulaire 1, un panneau 14 puisse être inséré entre ces éléments de fixation 4 et 13.

Le panneau 14 peut être réalisé dans une matière thermoplastique, par exemple du polyéthylène, ou encore en contre-plaqué.

L'invention n'est pas limitée à un type de panneau particulier, le panneau 14 pouvant être, comme illustré sur les figures, de forme rectangulaire, ou, en variante, présenter tout autre forme, par exemple une forme générale de disque ou de demi-disque.

Le panneau 14 comporte un orifice 15 destiné à être positionné au droit des ouvertures 10 des éléments de fixation 4 et 13 de manière à former un passage pour la tige d'une vis 17.

A l'étape de la figure 3, le panneau 14 est positionné contre la face 5 de l'élément de fixation 4 et l'élément de fixation 13 monté sur l'élément tubulaire 1 est dans une position angulaire espacée du panneau 14. L'élément de fixation 13 est ensuite déplacé suivant un pivotement par rapport à l'axe X de manière à l'amener en appui contre un côté du panneau 14.

Une fois le panneau 14 enserré dans la paire d'éléments de fixation 4 et 13, la vis 17 est introduite dans le passage traversant l'élément de fixation 4, le panneau 14 et l'élément de fixation 13, la vis 17 étant retenue dans ce passage au moyen d'un écrou 18 venant se loger dans le renfoncement 11 de l'élément de fixation 13.

Au moment du serrage de la vis dans l'écrou, les portées 8 des pattes 7 sont contraintes contre la paroi intérieure de l'élément tubulaire 1, assurant ainsi le blocage définitif de l'assemblage.

La profondeur des renfoncements 11 est sélectionnée de manière à ce que ni la tête de vis 17 ni l'écrou 18 ne débordent de la surface extérieure des éléments de fixation 4 et 13, comme on peut le voir sur la figure 5.

L'assemblage ainsi obtenu présente un aspect esthétique satisfaisant et offre de bonnes conditions de sécurité vis-à-vis des enfants jouant sur l'installation de jeux.

Dans l'exemple de mise en oeuvre illustré à la figure 6, on prévoit un bouchon 21 destiné à être inséré dans le renfoncement 11 de chaque élément de fixation 4 ; 13.

Ce bouchon 21 vient recouvrir la tête de vis 17 ou l'écrou 18 et présente une paroi de fond 23 configurée de manière à définir avec la surface bombée de l'élément de fixation 4 ; 13 correspondant une surface sensiblement continue, sans aspérités notables.

Chaque renfoncement 11 comporte une nervure 20 apte à coopérer avec une rainure 22 du bouchon 21 de manière à réaliser une fonction de détrompeur.

Le panneau 14, dans l'exemple qui vient d'être décrit, est fixé par une seule paire d'éléments de fixation 4 ; 13 sur l'élément tubulaire 1.

On ne sort pas du cadre de la présente invention lorsque le panneau 14, notamment de dimensions plus grandes, est fixé entre deux éléments tubulaires 1 parallèles, le panneau étant maintenu sur chaque élément tubulaire par deux paires d'éléments de fixation 4 ; 13, par exemple.

Chaque élément tubulaire peut encore être configuré de manière à permettre le montage de deux paires d'éléments de fixation côte à côte, dans une même position longitudinale suivant l'axe X.

On a représenté sur les figures 7 et 8 un tel élément tubulaire 25.

Un élément de fixation 4 de chacune des deux paires est mis en place sur l'élément tubulaire 25 par l'intermédiaire d'une fente analogue aux fentes 2 et 3, comme illustré sur la figure 7.

Les deux autres éléments de fixation 4', représentés sur la figure 8 et destinés à être positionnés côte à côte, sont mis en place sur l'élément tubulaire 25 en engageant les pattes 7 correspondantes chacune dans une fente 26 de l'élément tubulaire 25.

Ces fentes 26 présentent une forme sensiblement carrée et sont disposées en damier, comme on peut le voir sur la figure 7.

Ainsi, après montage, les pattes 7 des éléments de fixation 4' sont en appui sur la paroi intérieure de l'élément tubulaire 25 et sont positionnées les unes au-dessus des autres selon une rangée, de manière alternée, comme on peut le voir sur la figure 8.

De cette manière, il est possible d'assembler sur l'élément tubulaire 25 deux panneaux 14 disposés, dans l'exemple décrit, à 90°.

On constate donc que la disposition décalée des pattes 7 par rapport à l'axe Y permet le montage sur l'élément tubulaire 25 de deux éléments de fixation 4' disposés côte à côte.

Dans un exemple de mise en oeuvre non illustré, l'élément tubulaire 25 peut comporter quatre ensembles de fentes 26 disposées en damier, espacés de 90° autour de l'élément tubulaire 25, de manière à fixer sur celui-ci quatre paires d'éléments de fixation permettant le maintien de quatre panneaux 14.

## Revendications

1. Assemblage d'un élément tubulaire (1) et d'au moins un panneau (14), comportant au moins une paire d'éléments de fixation (4 ; 4' ; 13) aptes à être montés sur l'élément tubulaire (1 ; 25), la paire d'éléments de fixation (4 ; 4' ; 13) et le panneau (14) étant configurés de manière à permettre le maintien du panneau entre les éléments de fixation, ceux-ci étant disposés de part et d'autre du plan du panneau, **caractérisé par le fait que** l'un au moins des éléments de fixation (4 ; 4' ; 13) comporte au moins une patte de fixation (7) apte à s'engager dans une fente (2, 3 ; 26) correspondante réalisée dans l'élément tubulaire (1 ; 25).

2. Assemblage selon la revendication 1, **caractérisé par le fait que** l'un au moins des éléments de fixation (4 ; 4' ; 13) comporte une face (5) destinée à venir s'appliquer contre un côté du panneau (14).

3. Assemblage selon l'une des revendications 1 et 2, **caractérisé par le fait que** ladite au moins une patte de fixation (7) comporte une portée (8) apte à venir en appui contre une paroi intérieure de l'élément tubulaire (1 ; 25).

4. Assemblage selon l'une quelconque des revendications précédentes, **caractérisé par le fait que** l'un au moins des éléments de fixation (4 ; 13) comporte au moins deux pattes de fixation (7) décalées par rapport à un axe central (Y) de l'élément de fixation.

5. Assemblage selon la revendication 4, **caractérisé par le fait que** l'élément tubulaire (25) comporte une pluralité de fentes (26) permettant la fixation d'au moins deux paires d'éléments de fixation, côte à côte.

6. Assemblage selon l'une quelconque des revendications précédentes, **caractérisé par le fait que** ladite au moins une patte de fixation (7) est configurée de manière à ce que, lorsqu'elle est insérée dans la fente (2, 3 ; 26) correspondante de l'élément tubulaire, l'élément de fixation (4 ; 13) puisse pivoter par rapport à l'élément tubulaire, au moins avant la mise en place du panneau (14).

7. Assemblage selon l'une quelconque des revendications précédentes, **caractérisé par le fait que** les éléments de fixation (4 ; 4' ; 13) comportent chacun une ouverture (10) et le panneau un orifice (15) et **par le fait que** lesdites ouvertures et ledit orifice sont configurés de manière à définir un passage pour la tige d'une vis (17) coopérant avec un écrou.

8. Assemblage selon la revendication 7, **caractérisé par le fait que** l'un au moins des éléments de fixation (4 ; 4' ; 13) comporte un renfoncement (11) apte à loger la tête d'une vis ou un écrou, la profondeur du renforcement étant notamment sélectionnée de manière à ce que la tête de vis ou l'écrou y soit complètement logé(e).

9. Assemblage selon la revendication 8, **caractérisé par le fait qu'**il comporte au moins un bouchon (21) configuré pour pouvoir s'engager dans le renfoncement (11) en recouvrant la tête de vis ou l'écrou.

10. Assemblage selon l'une quelconque des revendications précédentes, **caractérisé par le fait que** les éléments de fixation (4 ; 4' ; 13) présentent chacun une forme générale de demi-coquille.

11. Elément de fixation (4 ; 4' ; 13) pour l'assemblage d'un élément tubulaire (1) et d'un panneau (14), **caractérisé par le fait qu'**il comporte au moins une patte de fixation (7) apte à s'engager dans une fente (2, 3) de l'élément tubulaire, **par le fait qu'**il comporte une ouverture (10) permettant le passage d'une tige de vis pour le maintien du panneau, et **par le fait qu'**il comporte une face (5) destinée à venir s'appliquer contre un côté du panneau.

12. Elément tubulaire (1) d'un assemblage selon l'une quelconque des revendications 1 à 10, **caractérisé par le fait qu'**il comporte quatre fentes (26) disposées en damier.
